# EUROPÄISCHE PATENTSCHRIFT

(11) **EP 2 602 527 B1**
(45) Veröffentlichungstag und Bekanntmachung des Hinweises auf die Patenterteilung: **19.02.2014**
(21) Anmeldenummer: 11192454.4
(22) Anmeldetag: 07.12.2011
(51) Int. Cl.: F16K 31/60, G05G 1/12

(54) **Spindel für ein Ventiloberteil**
Spindle for a valve top
Broche pour une partie supérieure de robinet

(43) Veröffentlichungstag der Anmeldung: 12.06.2013
(73) Patentinhaber: Flühs Drehtechnik GmbH, 58515 Lüdenscheid (DE)
(72) Erfinder: Thurau, Friedrich, 58849 Herscheid (DE)
(74) Vertreter: Dörner, Kötter & Kollegen

(56) Entgegenhaltungen:
- DE-A1- 2 139 638
- DE-A1- 2 229 422
- DE-U- 1 818 905
- US-A- 2 783 075
- US-A- 4 445 529
- US-A1- 2007 062 581

## Beschreibung

Die Erfindung betrifft eine Spindel zur Betätigung des Ventilkörpers eines Ventiloberteils, das endseitig mit einem Bedienteil versehen ist.

Ventiloberteile dienen der Steuerung des Austritts von Medien aus Armaturen. Zu diesem Zweck wird das Ventiloberteil mittels seines Kopfstücks in das Gehäuse einer Armatur geschraubt; innerhalb des Kopfstücks ist ein Ventilkörper angeordnet, der über eine das Kopfstück durchdringende Spindel betätigbar ist. Endseitig ist auf der Spindel ein Bedienteil in Form eines Drehgriffs oder Hebels befestigt. Hierzu ist in der Spindel eine Gewindebohrung eingebracht, in das eine durch das Bedienteil geführte Befestigungsschraube eingeschraubt ist. Um die erforderliche radiale Verbindung zu erzielen, wird die Schraube mit einem hohen Anzugsmoment befestigt und ggf. zusätzlich verklebt. Ein solches Ventiloberteil ist aus der DE 18 18 905 U bekannt.

Nachteilig an der vorbekannten Verbindung zwischen Betätigungsteil und Spindel ist, dass durch das hohe Anzugsmoment der Schraube eine Überbelastung der Flanken erfolgen kann, wodurch die Zuverlässigkeit der Verbindung beeinträchtigt ist. Zudem gestaltet sich die Montage aufwendig.

Hier will die Erfindung Abhilfe schaffen. Der Erfindung liegt die Aufgabe zugrunde, eine Spindel zur Betätigung des Ventilkörpers eines Ventiloberteils bereitzustellen, bei der die Montage des Bedienteils erleichtert und die Verbindung zwischen Bedienteil und Spindel verbessert ist. Gemäß der Erfindung wird diese Aufgabe durch die Merkmale des kennzeichnenden Teils des Patentanspruchs 1 gelöst.

Mit der Erfindung ist eine Spindel zur Betätigung des Ventilkörpers eines Ventiloberteils geschaffen, bei der die Montage des Bedienteils auf der Spindel vereinfacht und die Verbindung zwischen Bedienteil und Spindel verbessert ist. Durch den Eingriff des an der Spindel angeordneten Außenvielkants in den innerhalb der Sackbohrung angeordneten Innenvielkant ist ein radialer Formschluss erzielt.

Hierdurch ist lediglich eine axiale zusätzliche Sicherung erforderlich, welche gering dimensioniert sein kann, da die Spindel regelmäßig nur geringen axialen Belastungen ausgesetzt ist.

In Weiterbildung der Erfindung sind Innen- und Außenvielkant als korrespondierende Verzahnungen ausgebildet. Hierdurch ist eine fein gerastete Justierung des Bedienteils auf der Spindel ermöglicht.

In weiterer Ausgestaltung der Erfindung ist an der dem Bedienteil zugewandten Seite des Außenvielkants ein Zentrierabsatz an der Spindel angeformt, der einen geringeren Außendurchmesser als der Außenvielkant aufweist und der in einem Absatz der Sackbohrung mit korrespondierenden Innendurchmesser eingreift. Hierdurch ist eine gute Zentrierung der Spindel in dem Bedienteil ermöglicht. Einer möglichen Verkantung der Verzahnung ist wirksam entgegengewirkt.

In weiterer Ausgestaltung der Erfindung ist an der dem Zentrierabsatz gegenüberliegenden Seite des Außenvielkants in die Spindel eine Nut eingebracht, die einen umlaufenden Steg begrenzt, der einen geringeren Außendurchmesser als die dem Steg gegenüberliegende Wandung der Nut aufweist, in die eine im Zuge der Montage umgebördelte, innerhalb der Sackbohrung angeordnete Bördelkante eingreift. Hierdurch ist eine ausreichende axiale Sicherung bei minimalem Montageaufwand erzielt. Vor der Montage liegt die umlaufende Bördelkante auf dem durch die durch die größere Wandung der Nut gebildete Anschlagfläche auf. Durch einen axialen Impuls auf das Bedienteil wird die umlaufende Bördelkante in die umlaufende Nut hineingebördelt, wodurch die Verbindung erzielt ist.

Bevorzugt begrenzt die umgebördelte Bördelkante innerhalb der Sackbohrung einen Absatz, der den nach außen ragenden Teil der Spindel bereichsweise umschließt. Hierdurch ist eine gute Abdichtung der Sackbohrung nach außen erzielt, wodurch dem Eindringen von Schmutz in die Sackbohrung entgegengewirkt ist.

Gegenstand der vorliegenden Erfindung ist weiterhin ein Ventiloberteil mit einem Kopfstück zur Anlage mit dem Ventilsitz eines Gehäuses, wobei das Kopfstück von einer Spindel der vorgenannten Art mittig durchsetzt ist, über die ein Ventilkörper betätigbar ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

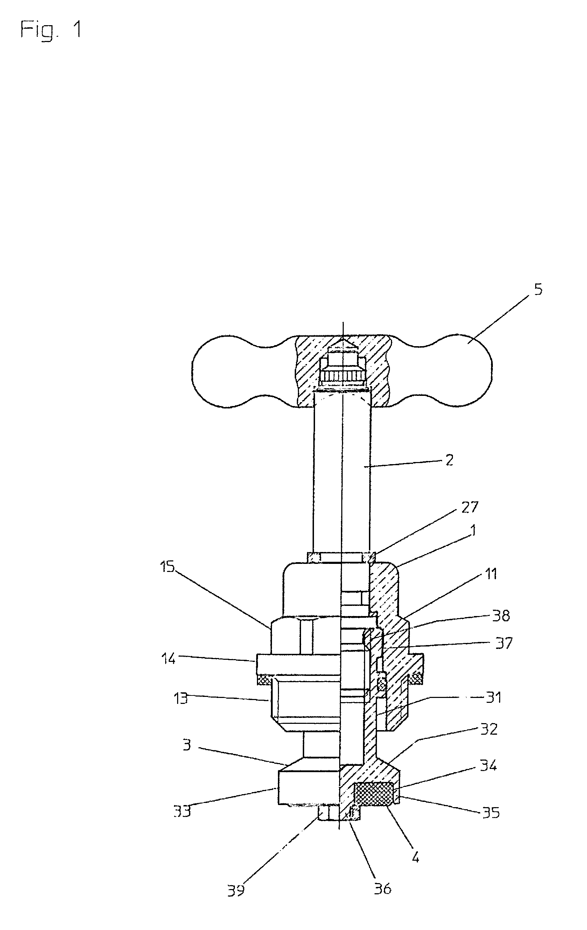

- Fig. 1: die Darstellung eines Ventiloberteils teilweise in Ansicht, teilweise im Axialschnitt;

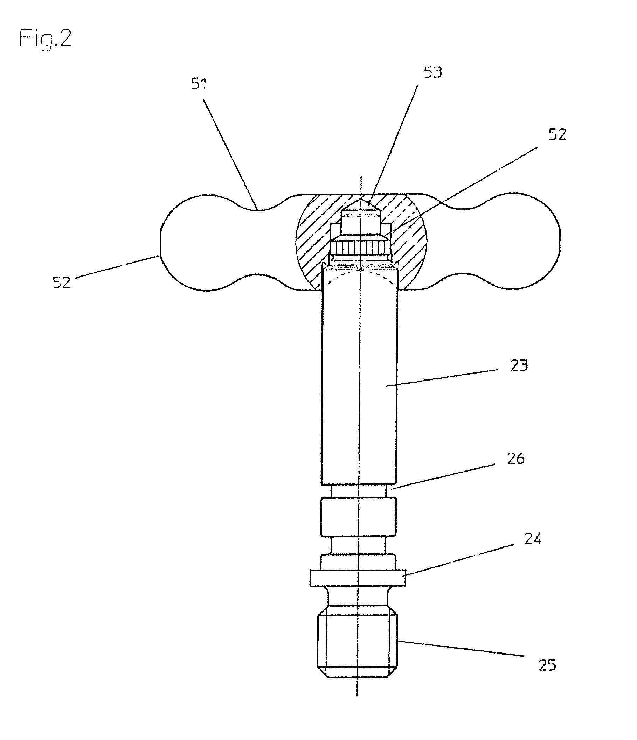

- Fig. 2: die Darstellung der Spindel des Ventiloberteils aus Figur 1 mit angeordnetem Bedienteil und

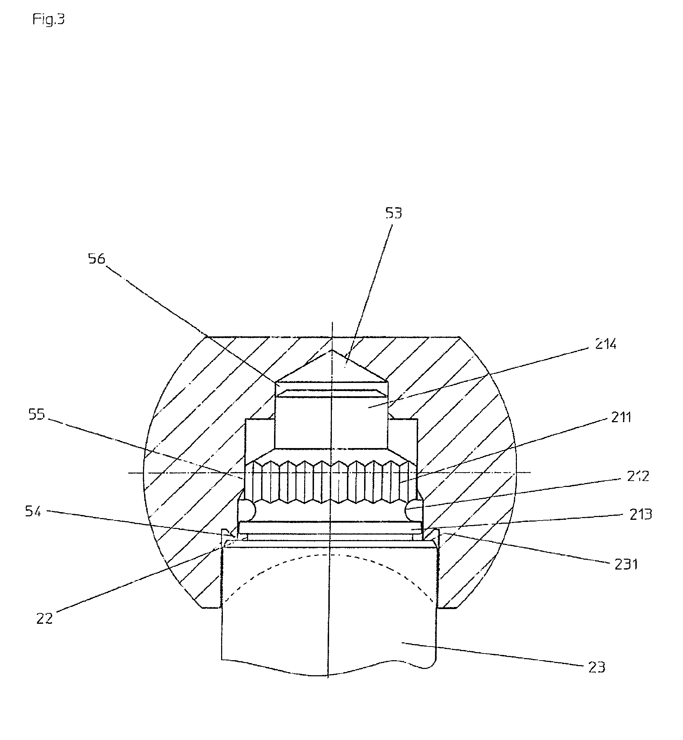

- Fig. 3: die Detaildarstellung des Verbindungsabschnitts zwischen Bedienteil und Spindel des Ventiloberteils aus Figur 1.

Das als Ausführungsbeispiel gewählte Ventiloberteil weist ein Kopfstück 1 auf, das von einer in dieser radial geführten Spindel 2 mittig durchsetzt ist. Über die Spindel 2 ist ein Ventilkörper 3 betätigbar, der mit dem Ventilsitz eines - nicht dargestellten - Gehäuses zur Anlage kommt. Der Ventilkörper 3 weist einen im Wesentlichen zylindrischen Ventilstempel 33 auf, der eine Dichtscheibe 4 aufnimmt, die von dem umlaufenden Rand 35 der die Dichtscheibe 4 aufnehmenden Nut 34 umgeben ist, wobei die Dichtscheibe 4 sowie der umlaufende Rand 35 der Nut 34 mit dem Ventilsitz des - nicht dargestellten - Gehäuses zur Anlage kommen.

Das Kopfstück 1 besteht aus einem symmetrischen Hohlkörper, dessen beide Stirnflächen offen sind. Auf seiner der Dichtscheibe 4 zugewandten Seite weist das Kopfstück 1 einen hülsenartigen Teil 11 auf. An seinem der Dichtscheibe 4 zugewandten Ende ist das Kopfstück 1 außen mit einem Anschlussgewinde 13 versehen. Mit Hilfe des Anschlussgewindes 13 ist das Kopfstück 1 in das - nicht dargestellte - Gehäuse einer Armatur einschraubbar.

Nach dem Einschrauben liegt ein Einschraubbund 14 des Kopfstücks 1 auf dem - nicht dargestellten - Gehäuse einer Armatur auf. Das Einschrauben in die Armatur erfolgt mittels eines Außenmehrkants 15, der auf der dem Anschlussgewinde 13 abgewandten Seite des Einschraubbundes 14 vorgesehen ist.

Die Spindel 2 ist im Wesentlichen massiv ausgeführt. Sie ist an ihrer dem Kopfstück 1 abgewandten Seite mit einem Befestigungsabschnitt 21 versehen, der über eine Bördelnut 22 mit einem zylindrischen Abschnitt 23 verbunden ist. An den zylindrischen Abschnitt 23 schließt sich ein Einschraubbund 24 an, der ein endseitig der Spindel 2 eingebrachtes Außengewinde 25 begrenzt. Auf der dem Befestigungsabschnitt 21 zugewandten Seite des Einschraubbundes 24 ist weiterhin beabstandet zu diesem eine Nut 26 vorgesehen, in die eine Wellensicherung 27 in Form eines Sprengrings federnd eingelegt ist. Die Wellensicherung 27 verhindert das Eindringen der Spindel 2 in das Kopfstück 1 über das vorgesehene Maß hinaus.

Der Befestigungsabschnitt 21 umfasst einen Außenvielkant 211, der sich über einen Einstich 212 an einen umlaufenden Steg 213 anschließt, der die Bördelnut 22 begrenzt. Der umlaufende Steg 213 weist einen geringeren Außendurchmesser auf als der zylindrische Abschnitt 23, wodurch ein Anschlag 231 gebildet ist. Auf seiner dem Einstich 212 gegenüberliegenden Seite schließt sich an den Außenvielkant 211 ein Zentrierzylinder 214 an, der endseitig mit einer umlaufenden Fase versehen ist.

An dem Befestigungsabschnitt 21 der Spindel 2 ist ein Bedienteil 5 befestigt. Das Bedienteil 5 ist im Ausführungsbeispiel in Form eines im Wesentlichen zylinderförmigen Knebels ausgebildet, der an beiden Enden über eine Einschnürung 51 in ein kugelförmiges Endstück 52 übergeht. Mittig zwischen den Einschnürungen 51 ist in dem Bedienteil 5 eine Sackbohrung 53 eingebracht. Innerhalb der Sackbohrung 53 ist an einem ersten Absatz eine umlaufende Bördelkante 54 angeordnet, an die sich im weiteren Verlauf der Sackbohrung 53 ein Innenvielkant 55 anschließt. Der Innenvielkant 55 ist wie auch der Außenvielkant 211 der Spindel 2 im Ausführungsbeispiel als Verzahnung ausgebildet. An den Innenvielkant 55 schließt sich ein durchmesserverminderter Abschnitt 56 an, dessen Innendurchmesser im Wesentlichen dem Außendurchmesser des Zentrierzylinders 214 entspricht.

Zur Montage des Bedienteils 5 auf der Spindel 2 wird der Befestigungsabschnitt 21 der Spindel in die Sackbohrung 53 des Bedienteils 5 eingebracht, wobei der Zentrierzylinder 214 in den durchmesserverminderten Abschnitt 56 der Sackbohrung 53 eingeführt wird. Hierbei wird der Außenvielkant 211 der Spindel 2 mit dem Innenvielkant 55 des Bedienteils 5 in Eingriff gebracht. Die umlaufende Bördelkante 54 liegt nun auf dem Anschlag 231 des zylindrischen Abschnitts 23 der Spindel 2 auf. Durch einen in Bezug auf die Spindel 2 axialen Impuls auf das Bedienteil 5 wird die Bördelkante 54 in die Bördelnut 22 der Spindel 2 gebördelt, wodurch eine formschlüssige Verbindung erzielt ist. Die umgebördelte Bördelkante 54 begrenzt nun einen Absatz, der den nach außen ragenden Teil des zylindrischen Abschnitts 23 der Spindel 2 bereichsweise umschließt.

Der Ventilkörper 3 weist einen hohlzylindrischen Teil 31 auf, der über einen zylindrischen Absatz 32 mit einem Ventilstempel 33 verbunden ist. Konzentrisch zur Rotationsachse der Spindel 2 ist in den Ventilstempel 33 eine Nut 34 zur Aufnahme der Dichtscheibe 4 eingebracht. Die Nut 34 ist nach außen begrenzt durch einen umlaufenden Rand 35. Nach innen ist die Nut 34 begrenzt durch einen auf der Rotationsachse der Spindel 2 an den Ventilstempel 33 angeformten Gewindestift 36. Auf den Gewindestift 36 ist eine Dichtscheibe 4 aufgebracht und mittels einer Mutter 39 fixiert. An seinem dem Ventilstempel 33 abgewandten Ende ist an dem hohlzylindrischen Teil 31 ein Außensechskant 37 angeformt. Der Außensechskant 37 dient der Verdrehsicherung des Ventilkörpers 3 innerhalb des Kopfstücks 1. Innen ist der hohlzylindrische Teil 31 mit einem Innengewinde 38 versehen.

Der Ventilkörper 3 ist derart in das Kopfstück 1 eingebracht, dass der Außensechskant 37 des Ventilkörpers 3 an dem Innensechskant des Kopfstücks 1, der in Höhe des Einschraubbundes 14 des Kopfstücks 1 angeordnet ist, anliegt, wodurch der Ventilkörper 3 in dem Kopfstück 1 verdrehsicher gehalten ist. In das Innengewinde 38 des Ventilkörpers 3 ist das Außengewinde 26 der Spindel 2 eingeschraubt, wobei die Spindel 2 über die Wellensicherung 27 innerhalb des Kopfstücks 1 axial fixiert ist. Eine Drehung der Spindel 2 bewirkt somit eine axiale Bewegung des Ventilkörpers 3 innerhalb des Kopfstücks 1.

## Patentansprüche

1. Spindel (2) mit einem Bedienteil (5) zur Betätigung des Ventilkörpers (3) eines Ventiloberteils, das endseitig mit dem Bedienteil (5) versehen ist, wobei das Bedienteil (5) eine Sackbohrung (53) aufweist, in welche die Spindel (2) eingreift, wobei die Sackbohrung (53) mit einem Innenvielkant (55) versehen ist, in den ein an der Spindel (2) angeordneter Außenvielkant (211) eingreift, **dadurch gekennzeichnet, dass** an der dem Bedienteil (5) zugewandten Seite des Außenvielkants (211) ein Zentrierzylinder (214) an der Spindel angeformt ist, der einen geringeren Außendurchmesser als der Außenvielkant (211) aufweist und der in einen Abschnitt (56) der Sackbohrung (53) mit korrespondierendem Innendurchmesser eingreift und an der dem Zentrierzylinder (214) gegenüberliegenden Seite des Außenvielkants (211) in die Spindel (2) eine Nut (22) eingebracht ist, die einen umlaufenden Steg (213) begrenzt, der einen geringeren Außendurchmesser als die dem Steg (213) gegenüberliegende Wandung der Nut (22) aufweist, in die eine im Zuge der Montage umgebördelte, innerhalb der Sackbohrung (53) angeordnete Bördelkante (54) eingreift.

2. Spindel nach Anspruch 1, **dadurch gekennzeichnet, dass** Innenvielkant (55) und Außenvielkant (211) als korrespondierende Verzahnungen ausgebildet sind.

3. Spindel nach Anspruch 1 oder 2, **dadurch gekennzeichnet, dass** die umgebördelte Bördelkante (54) innerhalb der Sackbohrung (53) einen Absatz begrenzt, der den nach außen ragenden Teil der Spindel (2) bereichsweise umschließt.

4. Ventiloberteil mit einem Kopfstück (1) zur Anlage mit dem Ventilsitz eines Gehäuses , wobei das Kopfstück (1) von einer Spindel (2) nach einem der Ansprüche 1 bis 3 mittig durchsetzt ist, über die ein Ventilkörper (3) betätigbar ist.

## Claims

1. Spindle (2) with an operating part (5) for activating the valve body (3) of the top part of a valve, which is provided with the operating part (5) at its end, where the operating part (5) has a blind hole (53) into which the spindle (2) engages, where the blind hole (53) has an internal polygon (55), into which an external polygon (211) arranged on the spindle (2) engages, **characterised in that**, on the side of the external polygon (211) facing the operating part (5), a centring cylinder (214) is formed on the spindle which has a smaller outer diameter than the external polygon (211) and which engages into a section (56) of the blind hole (53) with a corresponding inner diameter, and on the side of the external polygon (211) opposite the centring cylinder (214) the spindle (2) has a groove (22) which delimits a circumferential ridge (213) which has a smaller outer diameter than the wall of the groove (22) opposite the ridge (213) into which a flanged edge (54), flanged during the assembly process and arranged within the blind hole (53) engages.

2. Spindle in accordance with claim 1, **characterised in that** the internal polygon (55) and the external polygon (211) are formed as corresponding denticulations.

3. Spindle in accordance with claim 1 or claim 2, **characterised in that** the flanged edge (54) within the blind hole (53) delimits a shoulder which embraces the outwardly projecting part of the spindle (2) in certain areas.

4. Valve top with a head piece (1) for resting against the valve seat of a housing, where the head piece (1) is penetrated centrally by a spindle (2) in accordance with any of the claims 1 to 3, by means of which a valve body (3) can be activated.

## Revendications

1. Broche (2) avec une manette de commande (5) pour actionner le corps (3) d'une partie supérieure de robinet, dotée en son extrémité du manette de commande (5) sachant que la manette de commande (5) présente un trou borgne (53) dans lequel pénètre la broche (2), sachant que le trou borgne (53) présente un creux polygonal (55) dans lequel engrène un embout polygonal (211) agencé contre la broche (2), **caractérisée en ce que** sur le côté de l'embout polygonal (211) regardant la manette de commande (5) est moulé un cylindre de centrage (214) contre la broche, cylindre qui présente un diamètre extérieur inférieur à celui de l'embout polygonal (211) et qui pénètre dans un segment (56) du trou borgne (53) présentant un diamètre intérieur correspondant, et **en ce que** sur le côté de l'embout polygonal (211) faisant face au cylindre de centrage (214) a été ménagée une gorge (22) dans la broche (2), gorge qui limite une nervure périmétrique (213) présentant un diamètre extérieur inférieur à celui de la paroi de la gorge (22) située en face de la nervure (213), gorge dans laquelle pénètre une arête (54) repliée au cours du montage et agencée à l'intérieur du trou borgne (53).

2. Broche selon la revendication 1, **caractérisée en ce que** le creux polygonal (55) et l'embout polygonal (211) sont configurés de sorte que leurs dentures s'épousent.

3. Broche selon la revendication 1 ou 2, **caractérisée en ce que** l'arête repliée (54) limite, à l'intérieur du trou borgne (53), un talon qui ceinture localement la partie de la broche (2) qui fait saillie vers l'extérieur.

4. Partie supérieure de robinet présentant une pièce têtière (1) venant appliquer contre le siège d'un carter, sachant que cette pièce têtière (1) est traversée en son centre par une broche (2) selon une des revendications 1 à 3, broche via laquelle un corps (3) de robinet est actionnable.
